# EUROPEAN PATENT APPLICATION

(11) **EP 2 676 783 A1**
(43) Date of publication of application: **25.12.2013**
(21) Application number: 12172399.3
(22) Date of filing: 18.06.2012
(51) Int. Cl.: B29C 45/27, B29C 45/14, A63B 45/00

(54) **Method for manufacturing a golf ball**

(71) Applicant: Biogolf Beheer B.V., 3449 JD Woerden (NL)
(72) Inventor: Wiegmans, Erwin, 3444 BD Woerden (NL)
(74) Representative: Nederlandsch Octrooibureau

(57) **Abstract**

The invention relates to a method for manufacturing a golf ball, wherein the mould comprises a ring shaped runner which runs around the entire cavity at the equator thereof, wherein the ring shaped runner comprises;
- a single inlet which is arranged such that the ring shaped runner is filled symmetrically,
- a number of pinpoint gates arranged along the ring shaped runner which gates provide fluid coupling of the ring shaped runner with the cavity,
- arranged at each respective pinpoint gate, respective means for providing a low pressure zone at each respective pinpoint gate,
- arranged at each respective pinpoint gate, respective staggered runner sections for providing whirl at a staggered runner section overlap such that the material flow heats up at the staggered runner section overlap, wherein each respective overlap is associated with a respective pinpoint gate.

## Description

### Background

The present invention relates to a method for manufacturing a golf ball. Such a method is known for example from US6235230 which is directed to an injection mould for forming a cover over a golf ball. US6235230 teaches to use a ring gate which means that the ball is injection moulded via a film around the entire equator. There is a need for an improved method for manufacturing a golf ball wherein the control of the process is improved which results in improved properties for the golf ball and wherein the quality of production improved.

### Summary of the invention

The invention aims to provide an improved method for manufacturing a golf ball, wherein a problem associated with known method for manufacturing a golf ball is at least partly solved.

Another object of the invention is to improve the quality of production of a method for manufacturing a golf ball, in particular to improve the spreading in production.

Yet another object of the invention is to provide a method for manufacturing a golf ball having improved playing properties.

According to a first aspect of the invention this is realized with a method for manufacturing a golf ball, the method comprising the steps;
- providing a vertical mould which defines a cavity for forming the golf ball,
- providing a preformed golf ball core having an initial shape,
- positioning the core in the centre of the cavity by a number of retractable positioning pins,
- over moulding the core to provide the core with a golf ball outer layer, **characterized in that**, the mould comprises a ring shaped runner which runs around the entire cavity at the equator thereof, wherein the ring shaped runner comprises;
- a single inlet which is arranged such that the ring shaped runner is filled symmetrically,
- a number of pinpoint gates arranged along the ring shaped runner which gates provide fluid coupling of the ring shaped runner with the cavity,
- arranged at each respective pinpoint gate, respective means for providing a low pressure zone at each respective pinpoint gate,
- arranged at each respective pinpoint gate, respective staggered runner sections for providing whirl at a staggered runner section overlap such that the material flow heats up at the staggered runner section overlap, wherein each respective overlap is associated with a respective pinpoint gate.

The single inlet being arranged such that the ring shaped runner is filled symmetrically, the respective means for providing a low pressure zone being arranged at each respective pinpoint gate, and the respective staggered runner sections being arranged at each respective pinpoint gate provide an improved balanced flow and a better controllable flow front and an improved filling of the mould in particular of a mould having a number of cavities.

The ring shaped runner having a single inlet here also means that the ring shaped runner has a coupling with the mould injection inlet which coupling is as direct as possible, without branches or at least subdivision.

One has to distinguish between gate and runner. The runner contains the melted material, often referred to as the melt. The gate is where the runner debouches in the cavity.

In an embodiment of the method, the respective pinpoint gates have a different angular orientation relative to the cavity for balancing the golf ball outer layer material flow. This allows for correction of the flow front by changing flow paths. This even more provides a better controlled and balanced filling of the mould.

In an embodiment of the method, the number pinpoint gates are evenly distributed along the ring shaped runner. The number of pinpoint gates is an even number like for example four.

In an embodiment of the method, the ring shaped runner is a hot runner arranged with an upper mould portion, and wherein preferably the ring shaped gate comprises inner heating means. This allows for more simple use of inserts at the cavity in connection with for example different type of balls.

In an embodiment of the method, the ring shaped runner is a cold runner constituted by the upper and lower mould portion.

In an embodiment of the method, the vertical mould comprises a number of cavities, each respective cavity having an respective ring shaped runner associated therewith, wherein all respective ring shaped runners are fluidly coupled with a common upstream primary hot runner section for supply of the golf ball outer layer material flow. This allows for the possibility of a better controllable flow front and an improved filling of the mould, while increasing production capacity.

In an embodiment of the method, the method comprises the steps;
- providing a lower retractable pin at the lower pole of the cavity, distinct from the number of retractable positioning pins,
- engaging the lower retractable pin with a flow front during moulding of the golf ball outer layer around the core for centring the flow front,
- subsequently building up a mould pressure against the lower retractable pin during a pressure build up time,
- maintaining the build up mould pressure during a mould pressure time,
- retract the lower retractable pin away from the cavity,
- filling of the void left by the further retractable pin for forming the golf ball.

This even more provides the possibility of a better controllable flow front and an improved filling of the mould in particular of a moulding having a number of cavities. In addition, failures associated with the flow front are importantly reduced. Moreover, this opens a possibility to remove pollution at the flow front upon retraction of the lower retractable pin away from the cavity. Mould pressure here refers to an internal mould pressure at the retractable pin.

In an embodiment of the method, the mould pressure is between 20%-100% of a mould injection pressure. The mould injection pressure is the pressure at which material is injected in the mould. A typical mould injection pressure is 1000 bar.

In an embodiment of the method, the pressure build up time is between 0,1 sec - 1 second.

In an embodiment of the method, the mould pressure time is relative small compared with the pressure build up time.

In an embodiment, the method comprising the steps;
- providing an upper retractable pin at the upper pole of the cavity, distinct from positioning pin
- engaging the upper retractable pin with the flow front during moulding of the golf ball outer layer around the core,
- subsequently building up the mould pressure against the upper retractable pin during the pressure build up time,
- maintaining the build up mould pressure during the mould pressure time,
- retract the upper retractable pin away from the cavity,
- filling of the void left by the upper retractable pin for forming the golf ball.

This even more provides the possibility of a better controllable flow front and an improved filling of the mould in particular of a moulding having a number of cavities.

In an embodiment, the providing a preformed golf ball core having an initial shape comprises the steps;
- injection moulding of the core in a core mould which includes supply of a core material flow comprising an elastic material component like cork,
- making the core mould pressureless for allowing the core to spring to its initial shape to initiate a flow out of the cavity of a surplus of core material.

This improves the playing properties of the obtained ball as well as the controllability of the manufacturing process making use of the material properties rather than machine operation.

In an embodiment of the method, both the upper and lower retractable pin have a leading end which is configured such as to form the golf ball outer layer, in particular a dimple thereof.

In an embodiment, the method comprises the use of biodegradable plastics and/or biopolymers for over moulding the core, and wherein preferably the core is made of biodegradable plastics and/or biopolymers, wherein the biodegradable plastics and/or biopolymers is selected from the group, aliphatic polyesters, polyanhydriden, starch derivates and cellulose esters..

The invention further relates to a mould for use in the method according to the invention.

In an embodiment, the mould comprises a plurality of cavities for simultaneously forming a plurality of golf balls.

The invention further relates to a golf ball obtained with the method according to the invention. The thus obtained golf ball has improved playing properties and a better adherence of the outer golf ball layer to the core.

In an embodiment, the golf ball comprises, in particular is made of, biodegradable plastics and/or biopolymers selected from the group, aliphatic polyesters, polyanhydriden, starch derivates and cellulose esters. However, it is conceivable that the golf ball is made of a thermoharder or a thermoplastic which is not necessarily a biodegradable plastic and/or biopolymer.

The invention further relates to a device comprising one or more of the characterising features described in the description and/or shown in the attached drawings.

The invention further relates to a method comprising one or more of the characterising features described in the description and/or shown in the attached drawings.

The various aspects discussed in this patent can be combined in order to provide additional advantageous advantages.

### Description of the drawings

The invention will be further elucidated referring to an preferred embodiment of the method or mould shown in the drawing wherein shown in:
Fig. 1 a mould in cross sectional side view for use in the method according to the invention;
fig. 2 a detail of the mould of fig. 1 in cross sectional bottom view,
fig. 3a-b the mould of fig. 1 during manufacture steps of the golf ball,
fig. 4a-b, in schematic top view different ring gate configurations of the mould of fig 1,
fig. 5 in perspective view a manufactured golf ball with the shape a ring gate, and
Fig. 6 a further embodiment of a mould in cross sectional side view for use in the method according to the invention.

### Detailed description of embodiments

The method and mould according to the invention will now be described referring to all figures.

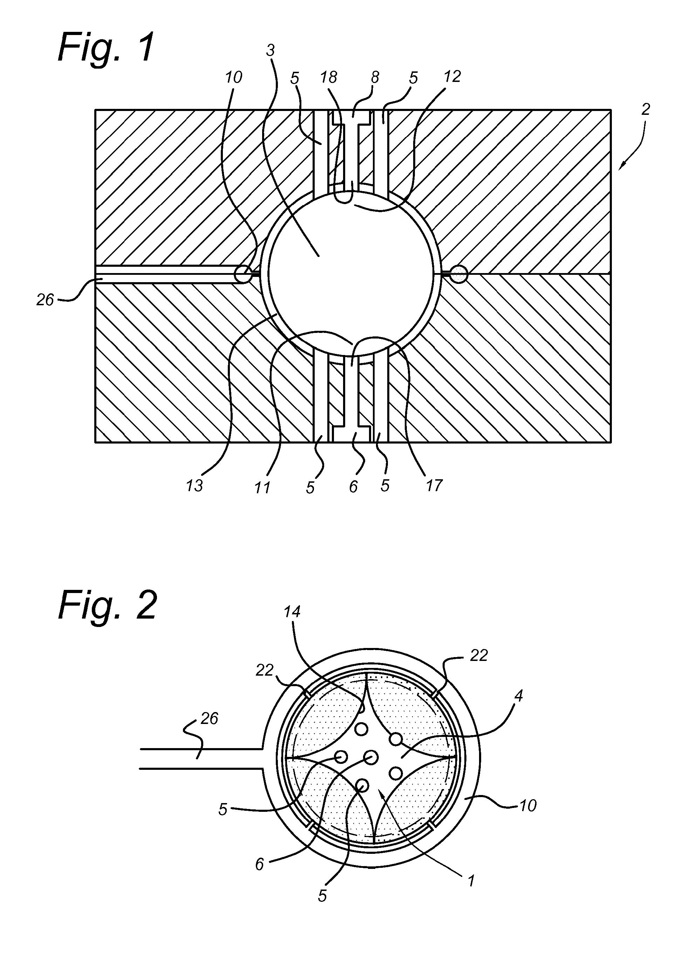

The method is for manufacturing the golf ball 1. The method provides a vertical mould 2 shown in fig. 1-3. The mould 2 defines a cavity 3 in a usual manner for forming the golf ball 1. The method provides a preformed golf ball core 4. The core 4 has an initial shape. The core 4 is positioned in the centre of the cavity 3 while having its initial shape. The core 4 is maintained in the centre of the cavity 3 by a number of retractable positioning pins 5 in a known manner. The number of retractable positioning pins 5 are disposed near the upper and lower poles 12, 11 of the mould 2.

The method provides over moulding of the core 4 to provide the core with a golf ball outer layer 7. Therefore, the mould comprises a ring shaped runner 10 which runs around the entire cavity 3 at the equator thereof. The ring shaped ringer 10 describes a complete circle around the cavity 3. The ring shaped runner 10 is a closed ring. The ring shaped runner 10 comprises a single inlet 26 which is arranged such that the ring shaped runner is filled symmetrically. The number of pinpoint gates 21, 22 are arranged along the ring shaped runner 10 which gates 21, 22 provide fluid coupling of the ring shaped runner 10 with the cavity 3. Respective means for providing a low pressure zone are arranged at each respective pinpoint gate 21, 22. Such means may for example comprise an increase in cross sectional area in downstream direction. Respective staggered runner sections 19, 20 are arranged at each respective pinpoint gate 21, 22 for providing whirl at respective staggered runner section overlaps 23 such that the material flow heats up at the staggered runner section overlaps. Each respective overlap 23 is associated with a respective pinpoint gate 21, 22.

The method provides a lower retractable pin 6 at the lower pole 11 of the cavity 3 and an upper retractable pin 8 at the upper pole 12of the cavity 3. This lower and upper retractable pins 6, 8 are distinct from the number of retractable positioning pins 5 and in its initial position in fig. 1 extend in the outer layer forming space 13 of the cavity 3. It is however conceivable that the lower and upper retractable pins 6, 8 also position the core 4. Upon moulding of the golf ball outer layer 7, the flow front 14 engages the lower and upper retractable pins 6, 8 for centring the flow front around these pins 6, 8 at the poles 11, 12. This way, the lower and upper retractable pins 6, 8 determine the location of the cover material flow terminus. Subsequently a mould pressure is build up against the lower retractable pin 6 during a pressure build up time. This mould pressure is maintained during a mould pressure time. Then, the lower and upper retractable pins 6, 8 are retracted away from its initial position to a retracted position, thereby leaving a respective void 15, 16 in the outer layer forming space 13. The void 15, 16 is then filled for forming the golf ball 1.

After moulding of the golf ball outer layer 7 around the core 3, the mould is made pressure less for allowing the core to spring back from a compressed state to its initial shape.

Here, both the upper and lower retractable pin 6, 8 have a respective leading end 17, 18 which is configured such as to also form the golf ball outer layer 7. In particular the upper and lower retractable pin 6, 8 form a dimple 9 of the golf ball 1. The upper and lower retractable pin 6, 8 also function as a vent pin and are provided with a conduit (not shown) for that purpose.

The golf ball outer layer 7 is moulded of a biopolymer, and the core 3 as well is made of biodegradable plastics and/or biopolymers selected from the group, aliphatic polyesters, polyanhydriden, starch derivates and cellulose esters or a combination thereof.

The mould 2 comprises a ring shaped runner 10 around the cavity 3 and a conduit (not shown) for supply of the melt is directly coupled with the ring shaped runner 10 at the single inlet 26.

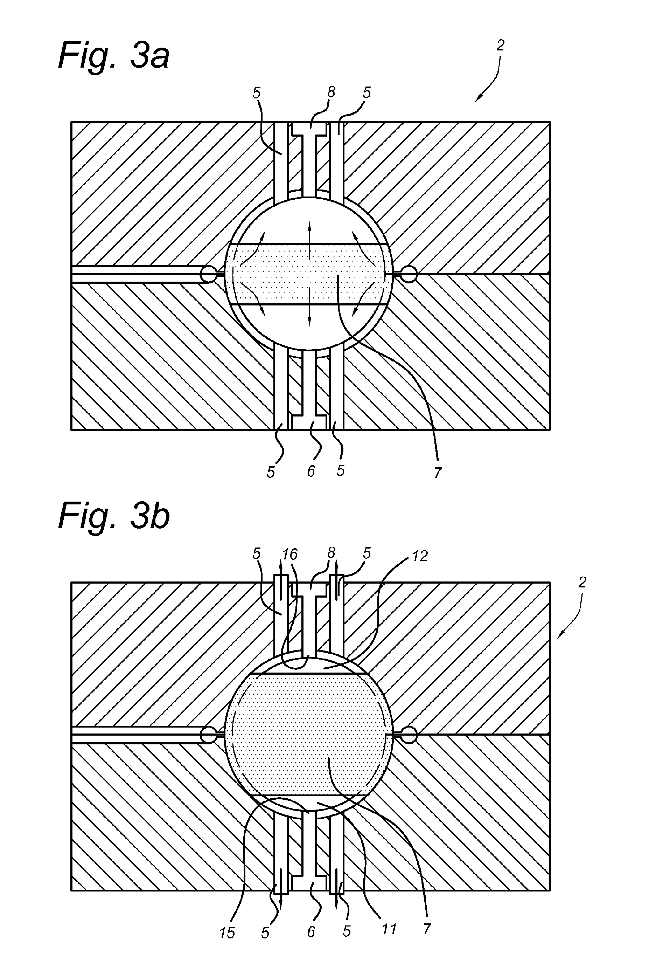

Fig. 3a-b shows that the mould 2 is uniformly filled to form the golf ball outer layer 7. The figures show a mould 2 or details thereof for use in the method according to a the invention. Fig 1. is a cross-sectioned side view of a golf ball injection mould having a ring shaped runner 10. Fig. 3 shows that the retractable pins 5 are engaged with the core 4 of the ball 1 and cover material is injected into the cavity 3 through the ring shaped runner 10 partially covers the core. In fig. 3b, the retractable pins 5 are disengaged from the core 4 of the ball 1, while the upper and lower retractable pin 6, 8 still engage the core 4. The cover material injected into the mould 2 through the ring shaped runner 10 substantially covers the core 4.

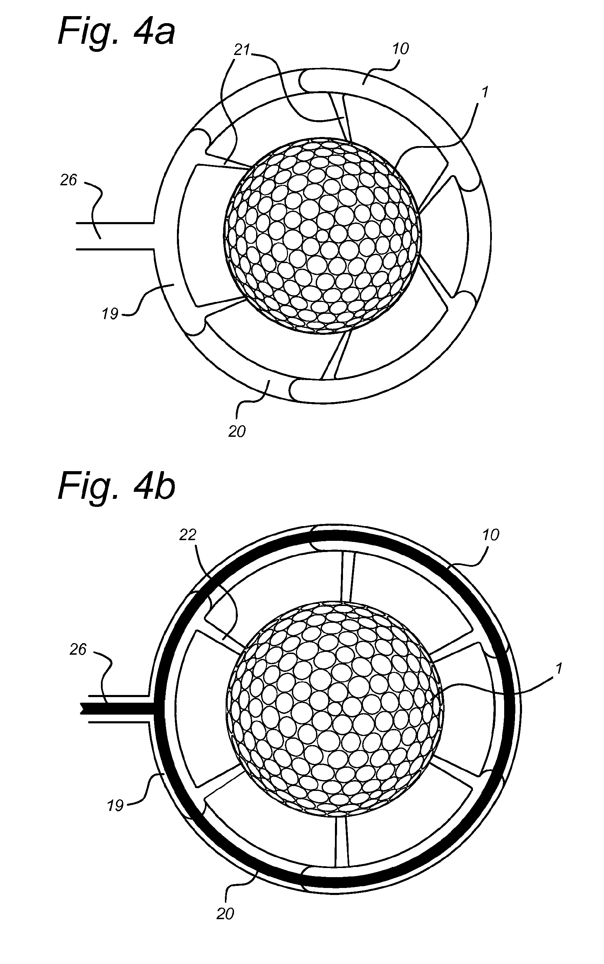

Fig. 4a-b, in show schematic top view different ring shaped runner 10 configurations of the mould 2. The ring shaped runner 10 extends completely around the cavity 3 and is disposed approximately at the equator of the mold cavity 3. The ring shaped runner 10 comprises alternate upper gate sections 19 formed in the upper mould plate and lower gate sections 20 formed in the lower mould plate, which sections 19, 20 represent staggered runner sections. This improves mixture and uniformity of the moulded material in particular at the overlap . The ring shaped runner 10 opens out into the cavity 3 via pinpoint gates 21, 22. These pinpoint gates 21, 22 may have different shape and angular orientation as shown and extend in the equatorial plane. The pinpoint gates 21, 22 may be evenly distributed (fig. 4b) along the ring shaped runner 10.

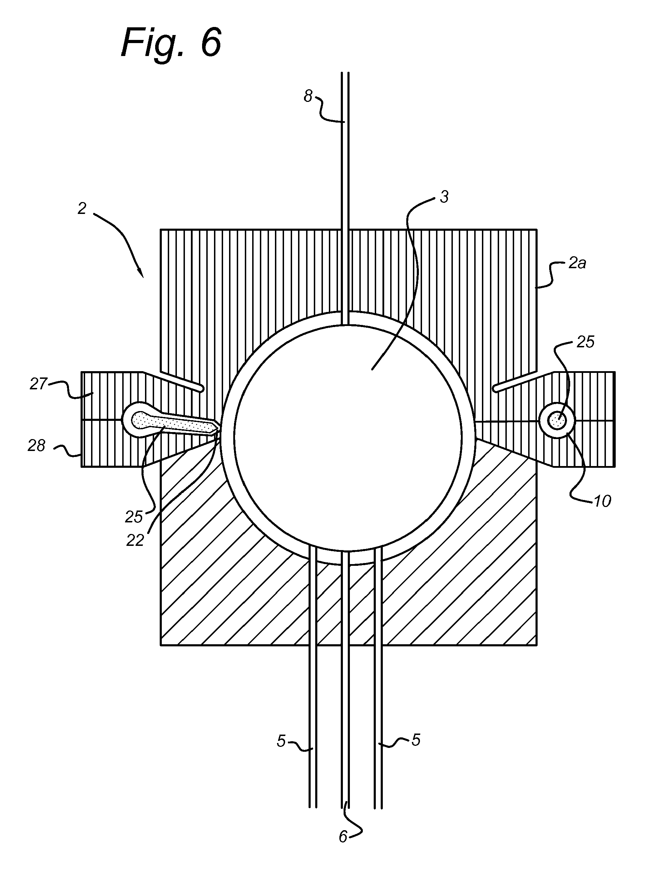

The ring shaped runner 10 of fig. 4b and fig. 6 is a hot runner arranged with an upper mould portion 2a. The ring shaped gate 10 comprises an inner heating means 25 for heating the melt shown in fig. 4b.

The ring shaped runner 10 of fig. 4a is a cold runner constituted by the upper and lower mould portion.

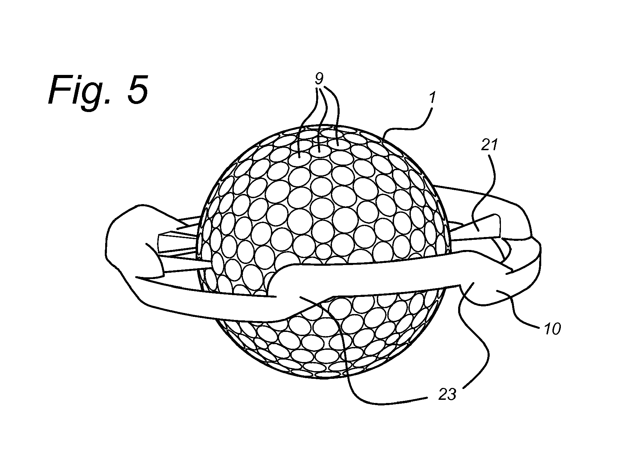

Fig. 5 shows in perspective view a manufactured golf ball 1 with the outer contour of a ring shaped runner 10 of fig. 4a. The ring shaped runner 10 of fig. 6 is a hot runner arranged with the upper mould portion 2a. The ring shaped gate 10 comprises inner heating means 25, known per se.

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Method for manufacturing a golf ball (1), the method comprising the steps;
- providing a vertical mould (2) which defines a cavity (3) for forming the golf ball,
- providing a preformed golf ball core (4) having an initial shape,
- positioning the core in the centre of the cavity by a number of retractable positioning pins (5),
- over moulding the core to provide the core with a golf ball outer layer (7), **characterized in that**, the mould comprises a ring shaped runner (10) which runs around the entire cavity at the equator thereof, wherein the ring shaped runner comprises;
- a single inlet which is arranged such that the ring shaped runner is filled symmetrically,
- a number of pinpoint gates (21, 22) arranged along the ring shaped runner which gates provide fluid coupling of the ring shaped runner with the cavity,
- arranged at each respective pinpoint gate, respective means for providing a low pressure zone at each respective pinpoint gate,
- arranged at each respective pinpoint gate, respective staggered runner sections (19, 20) for providing whirl at a respective staggered runner section overlap (23) such that the material flow heats up at the staggered runner section overlap, wherein each respective overlap is associated with a respective pinpoint gate.

2. Method for manufacturing a golf ball (1) according to claim 1, wherein respective pinpoint gates have a different angular orientation relative to the cavity for balancing the golf ball outer layer material flow.

3. Method for manufacturing a golf ball (1) according to claim 1 or 2, wherein the number of pinpoint gates are evenly distributed along the ring shaped runner.

4. Method for manufacturing a golf ball (1) according to a preceding claim, wherein the ring shaped runner is a hot runner arranged with an upper mould portion (2a), and wherein preferably the ring shaped gate (10) comprises inner heating means (25).

5. Method for manufacturing a golf ball (1) according to a preceding claim 1-4,
wherein the ring shaped runner is a cold runner constituted by the upper and lower mould portion.

6. Method for manufacturing a golf ball (1) according to a preceding claim, wherein the vertical mould comprises a number of cavities, each respective cavity having an respective ring shaped runner associated therewith, wherein all respective ring shaped runners (10) are fluidly coupled with a common upstream primary hot runner section for supply of the golf ball outer layer material flow.

7. Method for manufacturing a golf ball (1) according to a preceding claim, the method comprising the steps;
- providing a lower retractable pin (6) at the lower pole of the cavity, distinct from the number of retractable positioning pins,
- engaging the lower retractable pin with a flow front during moulding of the golf ball outer layer (7) around the core for centring the flow front,
- subsequently building up a mould pressure against the lower retractable pin during a pressure build up time,
- maintaining the build up mould pressure during a mould pressure time,
- retract the lower retractable pin away from the cavity,
- filling of the void left by the further retractable pin for forming the golf ball outer layer.

8. Method according to claim 1, wherein the mould pressure is between 20%-100% of a mould injection pressure.

9. Method according to a preceding claim, wherein the pressure build up time is between 0,1 sec - 1 second.

10. Method according to a preceding claim, wherein the mould pressure time is relative small compared with the pressure build up time.

11. Method according to a preceding claim, the method comprising the steps;
- providing an upper retractable pin (8) at the upper pole of the cavity, distinct from the number of retractable positioning pins,
- engaging the upper retractable pin with the flow front during moulding of the golf ball outer layer (13) around the core (3),
- subsequently building up the mould pressure against the upper retractable pin during the pressure build up time,
- maintaining the build up mould pressure during the mould pressure time,
- retract the upper retractable pin away from the cavity,
- filling of the void left by the upper retractable pin for forming the golf ball outer layer.

12. Method according to a preceding claim, wherein providing a preformed golf ball core (4) having an initial shape comprises the steps;
- injection moulding of the core (3) in a core mould which includes supply of a core material flow comprising an elastic material component like cork,
- making the core mould pressureless for allowing the core to spring to its initial shape to initiate a flow out of the cavity of a surplus of core material.

13. Method according to a preceding claim, where both the upper and lower retractable pin have a leading end which is configured such as to form the golf ball, in particular a dimple (9) thereof.

14. Method according to a preceding claim, comprising the use of biodegradable plastics and/or biopolymers for overmoulding the core, and wherein preferably the core is made of biodegradable plastics and/or biopolymers, wherein the biodegradable plastics and/or biopolymers is selected from the group, aliphatic polyesters, polyanhydriden, starch derivates and cellulose esters.

15. Golf ball obtained with the method according to a preceding claim, and preferably comprising, in particular made of, biodegradable plastics and/or biopolymers selected from the group, aliphatic polyesters, polyanhydriden, starch derivates and cellulose esters.
